# EUROPÄISCHE PATENTSCHRIFT

(11) **EP 2 230 059 B1**
(45) Veröffentlichungstag und Bekanntmachung des Hinweises auf die Patenterteilung: **07.12.2011**
(21) Anmeldenummer: 09015663.9
(22) Anmeldetag: 18.12.2009
(51) Int. Cl.: B29C 33/38, B29C 45/16, C25D 1/10

(54) **Herstellverfahren für eine Negativform für eine galvanische oder elektrophoretische Abscheidung**
Production method for a negative mould for galvanic or electrophoretic separation
Procédé de fabrication d'un moule négatif pour une séparation galvanique ou électro-phorétique

(30) Priorität: 27.02.2009 DE 102009010954
(43) Veröffentlichungstag der Anmeldung: 22.09.2010
(73) Patentinhaber: Karlsruher Institut für Technologie, 76131 Karlsruhe (DE)
(72) Erfinder: Ruprecht, Robert, 76115 Karlsruhe (DE); Piotter, Volker, 76351 Linkenheim (DE); Plewa, Klaus, 76756 Bellheim (DE); Lorenz, Julia, 77731 Legelshurst (DE); Walter, Heinz, 76287 Rheinstetten (DE); Prokop, Jürgen, 76829 Landau (DE)
(74) Vertreter: Gärtner, Stephan

(56) Entgegenhaltungen:
- WO-A2-02/057516
- DE-A1- 10 236 812
- DE-A1- 19 524 099
- DE-C1- 19 652 966
- JP-A- 2003 147 570
- JP-A- 2007 070 709
- PROKOP J ET AL: "Manufacturing process for high aspect ratio metallic micro parts made by electroplating on partially conductive templates" MICROSYSTEM TECHNOLOGIES ; MICRO AND NANOSYSTEMS INFORMATION STORAGE AND PROCESSING SYSTEMS, SPRINGER, BERLIN, DE, Bd. 14, Nr. 9-11, 12. Februar 2008 (2008-02-12), Seiten 1669-1674, XP019632887 ISSN: 1432-1858
- PIOTTER V ET AL: "Multi-component microinjection moulding-trends and developments" THE INTERNATIONAL JOURNAL OF ADVANCED MANUFACTURING TECHNOLOGY, SPRINGER, BERLIN, DE, Bd. 47, Nr. 1-4, 5. März 2009 (2009-03-05) , Seiten 63-71, XP019797765 ISSN: 1433-3015
- PIOTTER V ET AL: "INNOVATIVE MIKROFERTIGUNG: MEHRKOMPONENTEN-MIKROSPRITZGIESSEN" GALVANOTECHNIK, EUGEN G.LEUZE VERLAG, SAULGAU/WURTT, DE, Bd. 98, Nr. 8, 1. August 2007 (2007-08-01) , Seiten 1994-1997, XP001507519 ISSN: 0016-4232

## Beschreibung

Die Erfindung betrifft ein Herstellverfahren für eine Negativform für eine galvanische oder elektrophoretische Abscheidung gemäß des ersten Patentanspruchs.

Ein Weg zur Herstellung von metallischen oder keramischen Mikrokomponenten über einen Weg der galvanischen oder elektrophoretischen Abscheidung umfasst eine Herstellung einer Negativform aus einem lösbaren Material wie einem elektrisch leitfähig beaufschlagtem Polymer mit einer zumindest teilweise elektrisch leitenden Oberfläche als Elektrode. An dieser erfolgt eine galvanische oder elektrophoretische Abformung von Grünkörpern der metallischen bzw. keramischen Mikrokomponente aus einem Elektrolyten bzw. einer keramischen Suspension oder Kolloid. Die Abscheidung beginnt an der als Elektrode dienenden elektrisch leitenden Oberfläche. Dieser Schritt wird auch Galvanoformung bzw. Elektrophorese genannt. Im Anschluss daran werden die Grünkörper vorzugsweise durch chemisches Auflösen der Negativform in einem Lösungsmittel freigelegt und einer anschließenden Sinterung zugeführt. Die in diesem Verfahren grundsätzlich zerstörte Negativform wird auch als verlorene Form bezeichnet.

Für eine qualitativ hochwertige und reproduzierbare Herstellung von metallischen oder keramischen Mikrokomponenten über eine vorgenannte galvanische oder elektrophoretische Abformung ist die Vermeidung von Einschlüssen, Lunkern oder anderen Materialinhomogenitäten von immanenter Bedeutung. Die galvanische oder elektrophoretische Abscheidungsrate steigt nämlich mit der Feldliniendichte. Weisen beispielsweise mehrere abstehende Strukturen, welche auf dem Formkörper nahe beieinander angeordnet sind, eine elektrische leitende Oberfläche auf, kommt es an diesen zu einer bevorzugten galvanischen oder elektrophoretischen Abscheidung, im ungünstigen Fall zu einem Überdecken der Bereiche zwischen den Strukturen und damit zu einem Abschneiden dieser Bereiche vom laufenden Prozess. Meist wachsen in diesen Bereichen unerwünschte Lunker oder Einschlüsse aus Resten des verwendeten Elektrolyten oder Suspension bzw. Kolloides ein.

Zur Vermeidung derartiger Effekte ist es erforderlich, die elektrisch leitende Oberfläche und damit die galvanische oder elektrophoretische Abscheidung eines Metalls oder einer Keramik auf bestimmte Bereiche des Formkörpers zu beschränken. Abstehende, elektrisch nichtleitende Strukturen, aufgesetzt auf einer elektrisch leitenden Oberfläche auf einem Substrat, bewirken beispielsweise eine Abscheidung des Metalls oder der Keramik selektiv und mit konstanter Abscheidungsrate auf der Substratoberfläche und nach einer gewissen Zeit ein allmähliches und fehlerfreies Überdecken der Strukturen durch das abgeschiedene Metall.

Die genannte Gestaltung einer verlorenen Form lässt sich auf verschiedene Weise realisieren. Beispielhaft werden in diesem Zusammenhang ein Zweikomponentenspritzgussverfahren mit einer elektrische leitenden und einen elektrisch isolierenden Material, ein Spritzgussverfahren mit metallischen Einlegekomponenten, vorzugsweise den Elektroden oder ein Aufspritzen auf einem elektrisch leitendem Substrat genannt.

Die DE 102 36 812 A1 offenbart beispielhaft eine Herstellung einer verlorenen Form mittels Zweikomponentenspritzgießen, umfassend eine leitfähige und eine nicht leitfähige Polymerfraktion, mit anschließender galvanischen Abformung. Die elektrisch leitfähige Polymerfraktion besteht vorzugsweise aus einer Kunststoffmatrix mit einer eindispergierten elektrisch leitfähigen Pulverfraktion. Folglich ist diesem Verfahren eine insbesondere bei Mikroabmessungen zu beobachtende mangelhafte Leitfähigkeit in bestimmten Substratbereichen sowie eine dadurch verursachte inhomogene galvanische Abscheidung eigen.

Des weiteren ist die Herstellung von Inselstrukturen mit kleinsten Abmessungen nicht möglich, da in diesen Fällen die zweite Polymerkomponente durch die erste Komponenten gespritzt werden muss und dabei einfriert.

Die Verwendung von Einlegeplatten in einem Spritzgussteil im Rahmen eines elektrolytischen Herstellungsverfahrens ist beispielhaft in der DE 10 2005 012 016 B3 beschrieben. Vergleichsweise aufwendig ist hierbei die erforderliche Positionierung und Vorwärmung der Einlegekomponente im Werkzeug. Auβerdem eignet sich diese Herstellung nicht für die Realisierung von Inselstrukturen auf dem Einlegeteil.

Ferner ist aus der DE 196 52 966 C1 ein Verfahren bekannt, bei dem eine metallische dünne Schicht auf einer Polymerplatte so geprägt wird, dass die leitfähige Schicht auf den Grund zwischen den gleichzeitig geprägten Strukturen aus isolierendem Kunststoff als Galvanikstartschicht entsteht.

Eine besondere Anforderung an die Gestaltung und Herstellung einer verlorenen Form (Negativform) stellen zu fertigende Mikrokomponenten für rotierende Einsätze dar. Beispielsweise Zahnräder erfordern nicht nur eine hohe reproduzierbare Oberflächengüte und Passgenauigkeit der Zähne, sondern zudem auch exakt positionierten und ausgerichteten Aufnahmen für Zahnradwellen.

Dies zugrunde gelegt liegt die **Aufgabe der Erfindung** darin, ein Herstellverfahren für eine Negativform für eine galvanische oder elektrophoretische Abscheidung vorzuschlagen, das sich insbesondere für die formtreue Herstellung von Mikrostrukturen und Mikrokomponenten besonders für rotierende Anwendungen eignet.

Die Aufgabe wird durch ein Verfahren mit den Merkmalen des Anspruch 1 gelöst. Die auf diesen rückbezogene Unteransprüche geben vorteilhafte Ausführungsformen des Verfahrens wieder.

Die Lösung umfasst ein Herstellverfahren für eine Negativform für eine galvanische oder elektrophoretische Abscheidung auf einer elektrisch leitenden Folie mit mindestens einem Durchbruch.

Die Folie besteht vorzugsweise aus einer Metallfolie, vorzugsweise einem gut ätzbaren Metall wie Kupfer oder eine einseitig oder eine beidseitig mit Metall (z.B. mittels PVD-Verfahren) beschichtete Kunststofffolie. Die Folie ist ein Teil der verlorenen Form und ist daher nach der galvanischen oder elektrophoretischen Abscheidung rückstandsfrei von dem Grünkörper bzw. dem abgeschiedenen Mikrobauteil zu entfernen. Andererseits dient das elektrisch leitende Metall der Folie als elektrisch leitende Elektrode und ist folglich so auszuwählen, dass es sich einerseits während der galvanischen oder elektrophoretischen Abscheidung reaktionsträge (inert) verhält, andererseits sich chemisch oder thermisch von dem Grünkörper entfernen lässt. Als Elektrodenmaterial eignen sich für diesen zweck insbesondere unbeschichtetes, vernickeltes, vergoldetes oder mit Zinn-Nickel beschichtetes Kupfer, vorzugsweise Reinkupfer.

Die Folie wird zur Verbesserung der Verbundfestigkeit mit einer Spritzgussmasse vorzugsweise vor einem Aufbringen eines Spritzgussformkörpers mit einer thermisch vernetzbaren reaktiven Hartschicht auf Epoxidharzbasis beschichtet oder mechanisch oder chemisch aufgerauht.

In einem ersten Schritt wird die elektrisch leitende Oberfläche (erste Seite) der Folie auf mindestens ein (erster) mikrostrukturierter Formeinsatz aufgesetzt. Der Formeinsatz liegt dann über seine zur Folie gerichteten (ersten) Mikrostrukturen auf der ersten Seite der Folie auf. Diese Mikrostrukturen überdecken vorzugsweise Durchbrüche sowie einen elektrisch leitenden Folienoberflächenanteil, und zwar in einem flächigen Kontakt zueinander. Ein Eindringen von Fluiden in den Kontaktbereich zwischen Oberfläche und Einlegekomponenten werden damit erschwert und vorzugsweise unterbunden. Vorzugsweise weisen die applizierten Mikrostrukturen im Bereich der Durchbrüche eine Öffnung oder Kavität auf.

Es folgt ein stoffschlüssiges Aufbringen mindestens eines Spritzgussformkörpers aus einer ersten Spritzgussmasse auf der ersten Seite um die ersten Mikrostrukturen. Die Spritzgussmasse darf die Trennfuge zwischen Folie und Formeinsatz (Mikrostrukturen) nicht aufdrücken; die Zuhaltekraft muss über der Aufspreizkraft durch den auf Folie und Formeinsatz angreifenden Spritzdruck liegen.

In einem zweiten Schritt erfolgt ein stoffschlüssiges Aufbringen mindestens eines zweiten Spritzgusskörpers aus einer zweiten Spritzgussmasse auf der zweiten Seite der elektrisch leitenden Folie. Sofern Durchbrüche auf der zweiten Seite der Folie nicht durch mindestens einer (zweiten) Mikrostruktur oder auf andere Weise überdeckt oder verschlossen sind, erstreckt sich die Spritzgussmasse beim Aufbringen durch die zugänglichen Durchbrüche auch in die Kavitäten und Öffnungen in den ersten Mikrostrukturen. Alternativ lassen sich auch Einlegeteile wie z.B. Wellen oder Gewindestifte in die Durchbrüche und - sofern vorhanden - Kavitäten oder Öffnungen einsetzen und durch die zweite Spritzgussmasse formschlüssig einbinden. Vorzugsweise wird die Folie in eine Spritzgussmaschine eingesetzt und teilt dessen Spritzgussvolumen in zwei Teilbereiche. Vorteilhafterweise wird die Folie in die Trennfuge zwischen zwei Hälften eines Spritzgusswerkzeugs eingespannt und in dieser durch Führungsstifte, die in randseitigen Führungsdurchbrüchen in der Folie lateral fixiert. Letztere Maßnahme erleichtert ein exaktes Positionieren der Folie und insbesondere der Durchbrüche in der Folie in der Spritzgussmaschine signifikant und begünstigt damit eine Serienfertigung. Vorteilhaft für eine Serienfertigung mit hoher Reproduzierbarkeit ist eine Integration der vorgenannten Mikrostrukturen als Ausformungen in den Spritzgusswerkzeugen, d.h. nicht als separat einzusetzende Komponenten. Die vorgenannten Kavitäten oder Öffnungen in den Mikrostrukturen oder Ausformungen sind ferner als Zuführung einer Spritzgussmasse nutzbar. Die auf diese Weise zugeführte Spritzgussmasse wird dabei über die Mikrostrukturen oder Ausformungen durch die Durchbrüche der Folie in den gegenüberliegenden Teilbereich des Spritzgussvolumens geleitet und überbrückt damit das erste Spritzgussvolumen. Damit wird in vorteilhafter Weise eine Zuführung beider Spritzgussmassen über eine Hälfte des Spritzgusswerkzeugs realisiert, während die andere Hälfte des Spritzgusswerkzeugs keine Zuführung und vorzugsweise auch keine weiteren Anschlüsse aufweist, damit eine leichtere Handhabung ermöglicht und insbesondere ein öffnen oder Verschließen des Spritzgusswerkzeugs erheblich vereinfacht.

Da die erste Spritzgussmasse chronologisch vor der zweiten Spritzgussmasse eingesetzt wird, wird eine Schmelztemperatur oder die Erweichungstemperatur der ersten Spritzgussmasse vorzugsweise oberhalb der der zweiten Spritzgussmasse gewählt. Damit wird sichergestellt, dass die zweite Spritzgussmasse bei erstarrter ersten Spritzgussmasse, d.h. in einem Temperaturfenster zwischen den Schmelztemperaturen oder den Erweichungstemperaturen der beiden Spritzgussmassen verarbeitbar ist. Beispielsweise eignet sich ein PEEK (Polyetheretherketon) für die erste Spritzgussmasse und ein POM (Polyoxymethylen) für die zweite Spritzgussmasse.

Die Mikrostrukturen sind vorzugsweise mechanisch senkrecht zur Folie aus den sie umgebenden Spritzgussformkörpern abziehbar gestaltet. Montageschrägen auf dem Umfang oder in den Kavitäten der Mikrostrukturen sind zwar für ein erleichtertes Abziehen von Vorteil, aber insbesondere bei einer verlorenene Negativform z.B. für die galvanische oder eletrophoretische Abformung von Wellendurchbrüchen, Zahnradflanken oder anderen Teilen, die einen gleichen Querschnitt zwingend erfordern, nicht erwünscht. Ein problemloses Abziehen von Mikrostrukturen mit senkrechten Flanken, d.h. ohne Montageschrägen ist dennoch bei ausreichender Nachgiebigkeit sie umgebenden Spritzgussformkörper gegeben. Vorzugsweise besteht der Spritzgusskörper aus einem temperaturbeständigen Elastomer wie Silikon-Kautschuk. Insbesondere Spritzgussformkörper aus einem Elastomer schmiegen sich zudem in vorteilhafter Weise dichtend auf die elektrisch leitfähigen Seiten auch über Unebenheiten der Folie an und verhindern damit wirksam z.B. ein Eindringen von Elektrolyt in der nachgelagerten Galvanoformung.

Die mit den Negativformen herzustellende metallischen oder keramischen Komponenten, vorzugsweise Mikrobauteile werden mit Folienhinterspritzens, nachfolgender galvanischen oder elektrophoretischen Abscheidung und Trennen der Komponente aus der Form z.B. durch chemisches Auflösen der Kunststoffform sowie der Folie hergestellt. Durch die Kunststoffform wird erreicht, dass bei der Abscheidung die Metall- oder Keramikkomponenten mit einer definierten seitlichen Begrenzung von der Folie beginnend primär senkrecht zur Folie in die Höhe wachsen. Durch die elektrisch leitfähige Folie, kombiniert mit der isolierenden Kunststoffmikrostruktur ist damit eine lunkerfreie Abscheidung der Komponenten auch bei großen Strukturhöhe und eng beieinander stehenden Kunststoffmikrostrukturen in der Negativform möglich. Außerdem wird durch eine Strukturierung der Kunststoffform auf beiden Seiten der Folie eine höhere Anzahl von Komponenten (Kapazitätserweiterung) auch unterschiedlicher Geometrien vor und hinter der Folie ermöglicht. Weiterhin können verschiedene Komponenten auf der Vorder- und Rückseite die Folie ohne Montage- und zusätzlichen Füge oder Justageaufwand z.B. durch eingesetzte Komponenten als Einlegeteile bevorzugt in den Durchbrüchen der Folie miteinander verbunden werden.

Im Folgenden wird die Erfindung anhand von möglichen Ausführungsbeispielen und Figuren erläutert. Es zeigen
**Fig. 1a** **bis f** den prinzipiellen Verfahrensablauf für die Herstellung einer einseitigen Negativform,
**Fig. 2a** **bis d** den prinzipiellen Verfahrensablauf für die Herstellung einer einseitigen Negativform mit Inselstrukturen,
**Fig.3a** **bis f** den prinzipiellen Verfahrensablauf für die Herstellung einer zweiseitigen Negativform sowie
**Fig.4a** **bis g** den prinzipiellen Verfahrensablauf für die Herstellung von kombinierten Mikrostrukturen mit Einsetzteilen.

### Beispiel 1:

Beispiel 1 gibt den grundlegenden Verfahrensablauf wieder. Es zeigt die Herstellung einer Form mit einseitig zur Folie angeordneten Negativform für eine galvanische oder elektrophoretische Abscheidung zweier Mikrobauteile.

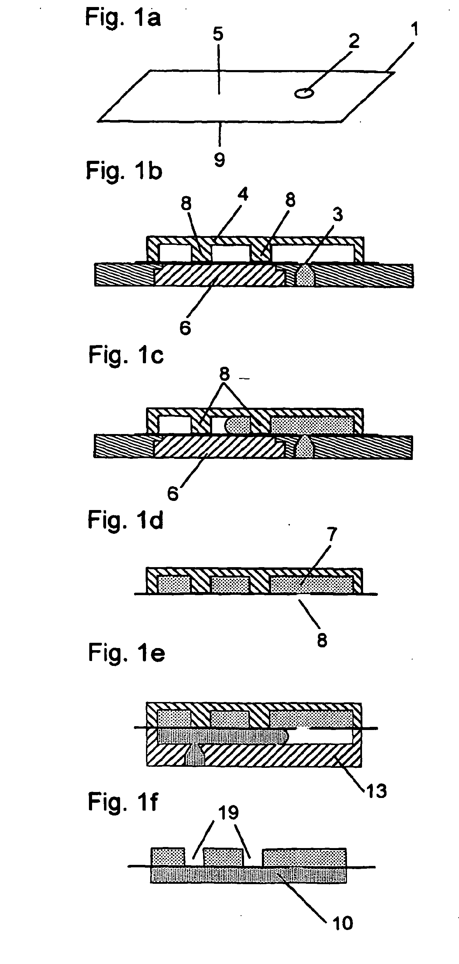

Folie **1 (****Fig.1a****)** wird in einem Spritzgießwerkzeug so angeordnet, dass der Durchbruch **2** an der Formmassenöffnung **3** der ersten Kavität angelagert ist und ein (erster) mikrostrukturierter Formeinsatz **4** mit Mikrostrukturen **8** auf die leitfähige (obere) erste Seite 5 der Folie angeordnet ist (vgl. **Fig.1b** und c). Auf der unteren Seite der Folie ist flächig ein weiterer (zweiter) Formeinsatz **6** angebracht. In einem ersten Spritzgießschritt werden die Mikrostrukturen **8** des mikrostrukturierten Formeinsatzes **4** mit einer ersten Spritzgießmasse umspritzt (**Fig.1c**); es entsteht auf der ersten Seite der Folie ein die Mikrostrukturen **8** umgebender erster Spritzgussformkörper **7** (vgl. **Fig. 1d**). Im darauf folgenden zweiten Spritzgussschritt erfolgt nach einer Entfernung des flächig auf der zweiten Seite anliegende zweite Formeinsatz **6** (Fig. 1d) und eines zweiten Formeinsatzes **13** eine Aufbringung eines zweiten Spritzgussformkörpers 10 auf der (unteren) zweiten Seite **9** der Folie (**Fig. 1e**). Im Anschluss daran erfolgt durch das Entformen des mikrostrukturierten ersten Formeinsatzes **4** sowie des zweiten Formeinsatzes **13** in vorgenannter Weise die Fertigstellung einer einseitig auf die Folie angeordneten Negativformen **19** für die galvanische oder elektrophoretische Abscheidung (**Fig. 1f**).

### Beispiel 2:

Beispiel 2 gibt wie Beispiel 1 einen Verfahrensablauf für die Herstellung einer einseitigen, d.h. nur auf einer Folienseite angeordneten Negativform wieder, jedoch mit der Integration von mindestens einer Inselstruktur. Die Beschreibung von Beispiel 2 konzentriert sich folglich auf die erforderlichen zusätzlichen Schritte oder Änderungen des Herstellungsverfahrens.

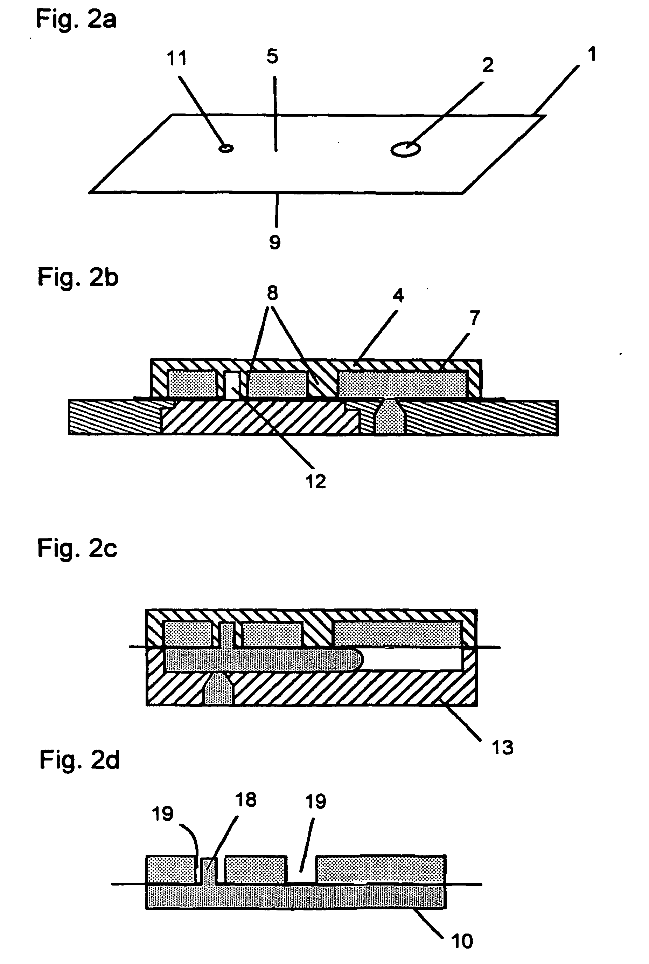

Eine zweite Durchgangsöffnung **11** (**Fig.2a**) in der Folie mündet in eine Kavität **12** in einer Mikrostruktur **8** aus (**Fig.2b**) und dient dabei als Einlauf für die zweite Spritzgießmasse in diese Kavität und damit zur Herstellung der Inselstrukturen **18** im zweiten Spritzgussschritt (**Fig.2c**, vgl. **Fig.1e**). Es folgt daraus die Fertigstellung einer einseitig auf der Folie angeordnete Negativform mit Inselstrukturen **18** für die galvanische oder elektrophoretische Abscheidung (**Fig.2d**).

### Beispiel 3:

Beispiel 3 zeigt die Herstellung einer Form mit beidseitig zur Folie angeordneten Negativformen für eine galvanische oder elektrophoretische Abscheidung von vier Mikrobauteilen wie z.B. von Zahnrädern.

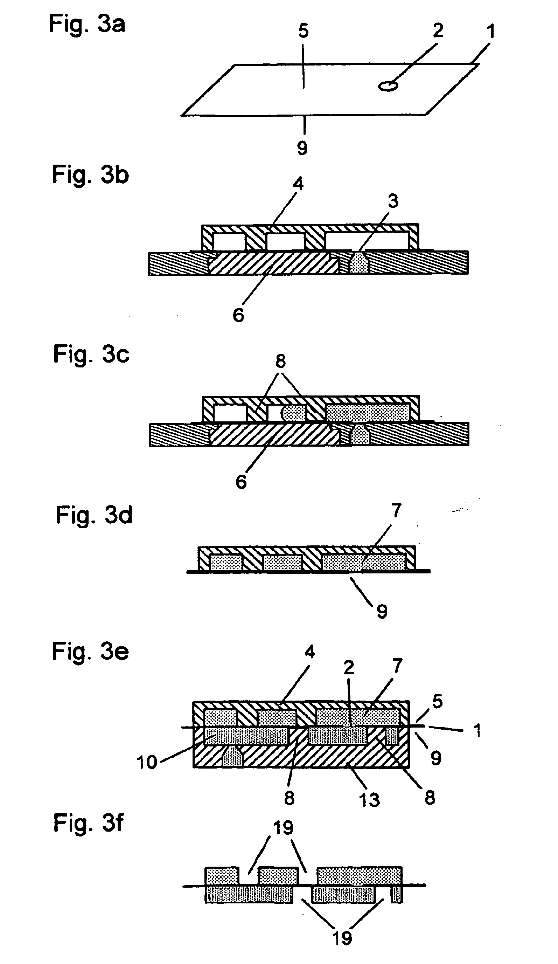

Ausgehend von einer Folie **1** (**Fig.3a**) mit zwei elektrisch leitfähigen Oberflächen (erste und zweite Seite **5** bzw. **9**) und einem Durchbruch **2** wird auf der ersten Seite 5 ein mikrostrukturierter Formeinsatz **4** aufgesetzt (**Fig.3b**, vgl. auch **Fig.1b**). In einem ersten Spritzgießschritt **(****Fig.3c**, vgl. auch **Fig. 1c****)** wird die Mikrostruktur **8** des Formeinsatzes **4** auf der ersten Seite 5 mit einer Spritzgießmasse umspritzt; es entsteht auf der ersten Seite der Folie ein die Mikrostrukturen umgebender erster Spritzgussformkörper **7**. Bis zu diesem Punkt entspricht die Vorgehensweise der in Beispiel 1 beschriebenen.

Danach wird auf die zweite Seite **9** der Folie **1** nach Entfernung des flächigen Formeinsatzes **6** (**Fig.3d**) ein weiterer (zweiter) Formeinsatz **13,** jedoch mit Mikrostrukturen **8** aufgesetzt und im darauf folgenden zweiten Spritzgießschritt ein zweiter Spritzgussformkörpers **10** um die Mikrostrukturen aufgetragen (**Fig.3e**). Nach Entformen der Formeinsätze entsteht eine beidseitig strukturierte Form (**Fig.3f**) mit vier Negativformen **19** für die Galvanoformung oder elektrophoretischen Abscheidung der vier Mikrobauteile.

### Beispiel 4:

Beispiel 4 zeigt die Herstellung einer Form mit beidseitig zur Folie angeordneter Negativformen für die galvanische oder elektrophoretische Abscheidung von vier Mikrobauteilen, von denen jeweils zwei zueinander positioniert werden und durch ein Einsetzteil verbunden werden. Das Verfahrensbeispiel eignet sich beispielsweise für die Herstellung von Negativformen für eine Abscheidung von Getriebe- oder Zahnradstufen.

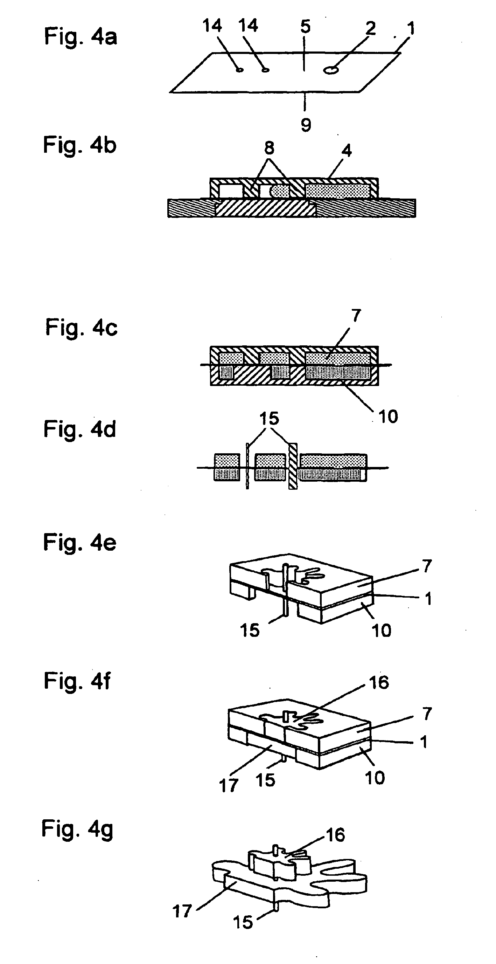

Ausgehend von einer Folie **1** (**Fig.4a**) mit zwei elektrisch leitfähigen Oberflächen (erste und zweite Seite **5** bzw. **9**) und zwei Durchbrüchen **14** wird auf die erste Seite **5** ein mikrostrukturierter Formeinsatz **4,** auf der zweiten Seite **9** ein flächig aufliegender Formeinsatz **6** aufgesetzt. Die Mikrostrukturen **8** des ersten Formeinsatzes **5** decken dabei die Durchbrüche **14** und einen Bereich der leitfähigen Folie ab.

In einem ersten Spritzgießschritt werden die Mikrostrukturen **8** auf der ersten Seite mit einer Spritzgießmasse umspritzt; es entsteht auf der ersten Seite **5** der Folie ein die Mikrostrukturen umgebender erster Spritzgussformkörper **7** (**Fig.4b**).

Darauf wird auf die zweite Seite **9** der Folie nach Entfernung des flächigen Formeinsatzes **6** ein weiterer (zweiter) mikrostrukturierter Formeinsatz **13** aufgesetzt, so dass auch hier die Mikrostrukturen die Durchbrüche **14** und einen Bereich der leitfähigen Folie abdecken. Im darauf folgenden zweiten Spritzgießschritt erfolgt eine Aufbringung eines zweiten Spritzgussformkörpers 10 um die Mikrostrukturen **8** des zweiten Formeinsatzes **13** (**Fig.4c**). Nach Entformen der Formeinsätze entsteht eine beidseitig strukturierte Form mit beidseitig offenen Durchbrüchen **14,** in die Wellen als Einsetzteile **15** eingesetzt werden (**Fig.4d**) und damit die Negativformen für die Galvanoformung oder elektrophoretischen Abscheidung zweier Zahnräder mit Welle komplettiert.

**Fig.4e** und **f** geben perspektivisch einen Ausschnitt um eine der beiden Einsetzteile **15** der in **Fig.4d** dargestellten Negativform wieder, wobei **Fig.4e** den Verfahrensstand gem. **Fig.4d** darstellt.

Nach der anschließenden galvanischen oder elektrophoretischen Abscheidung von zwei Zahnrädern **16** und **17** auf der Welle **15** in den Negativformen beidseitig der Folie 1 (**Fig.4f**) erfolgt eine chemische und/oder thermische Entfernung der Spritzgussformkörper **7** und **10** sowie der Folie **1** von der Welle **15** mit den abgeschiedenen Zahnrädern **16** und **17** (**Fig.4f**).

### Bezugszeichenliste

- 1: Folie
- 2: Durchbruch
- 3: Formmassenöffnung
- 4: erster Formeinsatz
- 5: erste Seite
- 6: flächiger Formeinsatz
- 7: erster Spritzgussformkörper
- 8: Mikrostruktur
- 9: zweite Seite
- 10: zweiter Spritzgussformkörper
- 11: Durchbruch
- 12: Kavität
- 13: zweiter Formeinsatz
- 14: Durchbruch (für Einsetzteil)
- 15: Einsetzteil
- 16: Zahnrad auf erster Seite
- 17: Zahnrad auf zweiter Seite
- 18: Inselstruktur
- 19: Negativform

## Patentansprüche

1. Herstellverfahren für eine Negativform für eine galvanische oder elektrophoretische Abscheidung auf einer elektrisch leitenden Folie **(1)** mit einer ersten und einer zweiten Seite **(5, 9)** sowie mindestens einem Durchbruch **(2, 11, 14)** umfassend die folgenden Verfahrensschritte:
a) Einbringen der elektrisch leitfähigen Folie in ein Spritzgießwerkzeug,
b) Aufsetzen eines ersten Formeinsatzes **(4)** mit Mikrostrukturen **(8)** auf die erste Seite **(5)** die Durchbrüche abdeckend sowie eines flächigen Formeinsatzes **(6)** auf die zweite Seite **(9)** der Folie **(1)**,
c) Stoffschlüssiges Aufbringen eines Spritzgussformkörpers **(7)** aus mindestens einer ersten Spritzgussmasse auf der ersten Seite **(5)** um die Mikrostrukturen **(8)**,
d) Trennen des flächigen Formeinsatzes **(6)** von sowie Aufsetzen eines zweiten Formeinsatzes **(13)** auf der zweiten Seite **(9)** der Folie,
e) Stoffschlüssiges Aufbringen mindestens einer zweiten Spritzgussformkörpers **(10)** aus einer zweiten Spritzgussmasse auf der zweiten Seite der elektrisch leitenden Folie sowie
f) Entformen der Spritzgussformkörper **(7, 10)** aus den Formeinsätzen **(4, 13)**.

2. Herstellverfahren nach Anspruch 1, **dadurch gekennzeichnet, dass** Spritzgießwerkzeug eine durch den Durchbruch **(2)** ausmündende Formmassenöffnung **(3)** aufweist.

3. Herstellverfahren nach Anspruch 1 oder 2, **dadurch gekennzeichnet, dass** mindestens ein Durchbruch **(11)** in eine Öffnung oder Kavität **(12)** in einer der Mikrostrukturen **(8)** des ersten Formeinsatzes **(4)** ausmündet und die zweiten Spritzgussformkörper **(10)** sich in diese erstrecken.

4. Herstellverfahren nach einem der vorgenannten Ansprüche, **dadurch gekennzeichnet, dass** der zweite Formeinsatz **(13)** auf der Folie flächig aufliegende Mikrostrukturen **(8)** aufweist, um die sich der zweite Spritzgussformkörper (10) erstreckt.

5. Herstellverfahren nach Anspruch 4, **dadurch gekennzeichnet, dass** die Mikrostrukturen **(8)** die Durchbrüche **(14)** sowie einen elektrisch leitenden Folienoberflächenanteil auf der ersten und/oder zweiten Seite beidseitig überdecken.

6. Herstellverfahren nach Anspruch 5, **dadurch gekennzeichnet, dass** nach dem Aufbringen des ersten und des zweiten Spritzgussformkörpers **(7, 10)** mindestens ein Einsetzteil **(15)** in mindestens einen Durchbruch **(14)** eingesetzt wird.

7. Herstellverfahren nach einem der vorgenannten Ansprüche, **dadurch gekennzeichnet, dass** die Schmelztemperatur oder die Erweichungstemperatur der ersten Spritzgussmasse oberhalb der der zweiten liegt.

8. Herstellverfahren nach einem der vorgenannten Ansprüche, **dadurch gekennzeichnet, dass** die erste Spritzgussmasse ein PEEK und die zweite Spritzgießmasse ein POM umfasst.

9. Herstellverfahren nach einem der vorgenannten Ansprüche, **dadurch gekennzeichnet**, das die Formeinsätze **(4, 13)** und/oder die Mikrostrukturen **(8)** aus mindestens einer Einlegekomponente ausgeführt ist.

10. Herstellverfahren nach Anspruch 9, **dadurch gekennzeichnet, dass** das Entfernen mindestens einer der Einlegekomponenten chemisch durch selektive Auflösung der Einlegekomponenten erfolgt.

## Claims

1. A production process for a negative mould for galvanic or electrophoretic separation on an electrically conductive film **(1)** having one first and one second side **(5, 9)** as well as at least one breakthrough **(2, 11, 14)**, comprising the following process steps:
a) Introducing the electrically conductive film into an injection-moulding tool,
b) Setting a first mould insert **(4)** having microstructures **(8)** onto the first side **(5)**, masking the breakthroughs, as well as a planar mould insert **(6)** onto the second side **(9)** of the film **(1)**,
c) Materially cohesive application of an injection-moulding body **(7)** consisting of at least one first injection-moulding mass on the first side **(5)** around the microstructures **(8)**,
d) Parting the planar mould insert **(6)** from, and setting a second mould insert **(13)** onto, the second side **(9)** of the film,
e) Materially cohesive application of at least one second injection-moulding body **(10)** consisting of a second injection-moulding mass on the second side of the electrically conductive film, and
f) Demoulding the injection-moulding body **(7, 10)** from the mould inserts **(4, 13)**.

2. A production process according to Claim 1, **characterised in that** injection-moulding tool exhibits an injection-moulding mass opening **(3)** discharging through the breakthrough **(2).**

3. A production process according to Claim 1 or 2, **characterised in that** at least one breakthrough **(11)** discharges into an opening or cavity **(12)** in one of the microstructures **(8)** of the first mould insert **(4)** and that the second injection-moulding bodies **(10)** extend into said opening or cavity.

4. A production process according to any one of the preceding claims, **characterised in that** the second mould insert **(13)** exhibits microstructures **(8)** that lie flat on the film and around which the second injection-moulding body **(10)** extends.

5. A production process according to Claim 3, **characterised in that** the microstructures **(8)** mask both sides of the breakthroughs **(14)** and an electrically conductive portion of the film surface on the first and/or second side.

6. A production process according to Claim 4, **characterised in that** after the application of the first and second injection-moulding body **(7, 10)** at least one insert **(15)** is inserted into at least one breakthrough **(14)**.

7. A production process according to any one of the preceding claims, **characterised in that** the melting temperature or softening temperature of the first injection-moulding mass is greater than that of the second.

8. A production process according to any one of the preceding claims, **characterised in that** the first injection-moulding mass comprises a PEEK and the second injection-moulding mass a POM.

9. A production process according to any one of the preceding claims, **characterised in that** the mould inserts **(4, 13)** and/or the microstructures **(8)** are made from at least one insert component.

10. A production process according to Claim 8, **characterised in that** the removing of at least one of the insert components is effected chemically by selective dissolution of the insert component.

## Revendications

1. Procédé de fabrication d'un moule négatif pour un dépôt galvanique ou un dépôt par électrophorèse sur un film électroconducteur (1) ayant un premier et un second côté (5, 9) ainsi qu'au moins un passage (2, 11, 14),
procédé comprenant les étapes suivantes :
a) mettre en place le film électroconducteur dans un outil d'injection,
b) installer un premier insert de moule (4) avec des microstructures (8) sur le premier côté (5), en couvrant les passages, ainsi qu'un insert de moule (6), plat, sur le second côté (9) du film (1),
c) mettre en place par une liaison par la forme, un corps moulé injecté (7) en au moins une première masse injectée sur le premier côté (5) autour des microstructures (8),
d) séparer l'insert de moule (6), plat, et mettre en place un second insert de moule (13) sur le second côté (9) du film,
e) appliquer avec une liaison par la matière, au moins un second corps injecté moulé (10) en injectant une seconde masse sur le second côté du film électroconducteur, et
f) démouler le corps moulé par injection (7, 10) en l'enlevant des inserts de moule (4, 13).

2. Procédé de fabrication selon la revendication 1,
**caractérisé en ce que**
l'outil d'injection comporte un orifice pour la masse de moulage (3), débouchant dans le passage (2).

3. Procédé de fabrication selon la revendication 1 ou 2,
**caractérisé en ce qu'**
au moins un passage (11) débouche dans une ouverture ou cavité (12) dans l'une des microstructures (8) du premier insert de moule (4) et le second corps moulé injecté (10) se développe dans cette cavité.

4. Procédé de fabrication selon l'une des revendications précédentes,
**caractérisé en ce que**
le second insert de moule (13) présente des microstructures (8) appliquées à plat sur le film et autour desquelles se développe le second corps moulé injecté (10).

5. Procédé de fabrication selon la revendication 4,
**caractérisé en ce que**
les microstructures (8) couvrent les passages (14) ainsi qu'une partie de la surface du film électroconducteur des deux côtés, sur le premier et/ou le second côté.

6. Procédé de fabrication selon la revendication 5,
**caractérisé en ce qu'**
après l'application du premier et du second corps moulé par injection (7, 10), on place au moins une pièce formant insert (15) dans au moins un passage (14).

7. Procédé de fabrication selon l'une des revendications précédentes,
**caractérisé en ce que**
la température de fusion ou la température de ramollissement de la première masse d'injection est supérieure à celle de la seconde masse.

8. Procédé de fabrication selon l'une des revendications précédentes,
**caractérisé en ce que**
la première masse d'injection est du PEEK (polyétheréthercétone) et la deuxième masse d'injection est du POM (polyoxyméthylène).

9. Procédé de fabrication selon l'une des revendications précédentes,
**caractérisé en ce que**
les inserts (4, 13) et/ou les microstructures (8) sont réalisés à partir d'au moins un composant d'insertion.

10. Procédé de fabrication selon la revendication 9,
**caractérisé en ce que**
l'enlèvement d'au moins l'un des composants d'insertion se fait chimiquement par dissolution sélective des composants d'insertion.
